# EUROPÄISCHE PATENTSCHRIFT

(11) **EP 1 895 364 B1**
(45) Veröffentlichungstag und Bekanntmachung des Hinweises auf die Patenterteilung: **12.03.2014**
(21) Anmeldenummer: 06119719.0
(22) Anmeldetag: 29.08.2006
(51) Int. Cl.: B65H 9/06, B65H 5/06, G03B 42/02

(54) **Vorrichtung und Verfahren zum Auslesen von Speicherleuchtstoffplatten**
Device and method for reading fluorescent storage plates.
Dispositif et procédé de lecture de plaques de phosphore de stockage

(43) Veröffentlichungstag der Anmeldung: 05.03.2008
(73) Patentinhaber: Agfa HealthCare, 2640 Mortsel (BE)
(72) Erfinder: Pirmann, Anton, 81243 München (DE); Butz, Otto, 85375 Neufahrn (DE); Kastl, Alfons, 85653 Aying (DE); Loistl, Rudolf, 82008 Unterhaching (DE)
(74) Vertreter: Linsmeier, Josef

(56) Entgegenhaltungen:
- EP-A- 1 065 523
- EP-A1- 1 014 173
- DE-A1- 19 752 925
- JP-A- 2000 272 780
- JP-A- 2000 302 282
- US-A1- 4 787 521
- US-A1- 4 837 064
- US-A1- 5 772 202
- US-A1- 2004 251 437

## Beschreibung

Die Anmeldung betrifft eine Vorrichtung sowie ein entsprechendes Verfahren zum Auslesen von Speicherleuchtstoffplatten zur Speicherung von Röntgeninformation gemäß dem Oberbegriff des Anspruchs 1 bzw. 11.

Eine Möglichkeit zur Aufzeichnung von Röntgenbildern besteht darin, die durch ein Objekt, beispielsweise einen Patienten, hindurch tretende Röntgenstrahlung als latentes Bild in einer so genannten Speicherleuchtstoffschicht zu speichern. Zum Auslesen des latenten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

Aus EP 1 014 173 B1 ist eine Vorrichtung bekannt, bei welcher die führende Kante einer im Wesentlichen vertikal orientierten Speicherleuchtstoffplatte aufgrund der Schwerkraft auf einer schwenkbaren Auflageleiste zu liegen kommen und durch einen Schieber entlang der Auflageleiste verschoben werden kann. In Fällen, in denen die Speicherleuchtstoffplatte im Wesentlichen horizontal orientiert ist, kann jedoch nicht gewährleistet werden, dass die Speicherleuchtstoffplatte mit ihrer führenden Kante stets zuverlässig an der Auflageleiste anliegen und entlang dieser verschoben oder an dieser ausgerichtet werden kann.

Aus US2004/0251437 ist eine Vorrichtung bekannt, die eine Steuerung der Transportwalzen zum Einstellen eines Druckes auf die Speicherleuchtstoffplatte, erfasst.

Aus JP2000302282 ist eine Vorrichtung bekannt, die eine Ausrichtkante mit eine erhobenen Rand, erfasst.

Es ist Aufgabe der Erfindung, eine Vorrichtung sowie ein entsprechendes Verfahren anzugeben, bei welcher bzw. welchem eine zuverlässige Ausrichtung der Speicherleuchtstoffplatte, insbesondere auch bei im Wesentlichen horizontal orientierter Speicherleuchtstoffplatte, ermöglicht wird.

Diese Aufgabe wird durch die Vorrichtung und das Verfahren gemäß Anspruch 1 bzw. 11 gelöst.

Die erfindungsgemäße Lösung basiert auf dem Gedanken, dass die Speicherleuchtstoffplatte durch eine oder mehrere rotierende Transportwalzen in Richtung auf die Ausrichtkante befördert wird und eine Steuerungseinrichtung zum Einstellen eines Druckes, mit dem die Transportwalzen auf die Speicherleuchtstoffplatte drücken, vorgesehen ist, wobei der Druck so eingestellt wird, dass zwischen den rotierenden Transportwalzen und der beförderten Speicherleuchtstoffplatte ein Schlupf auftritt, wenn die Speicherleuchtstoffplatte mit der Ausrichtkante in Berührung kommt, wodurch die Speicherleuchtstoffplatte ihre Orientierung ändert und dabei an der Ausrichtkante ausgerichtet wird.

Durch die Verwendung von rotierenden Transportwalzen, mit welchen die Speicherleuchtstoffplatte in Richtung auf die Ausrichtkante befördert wird, wird gewährleistet, dass die Speicherleuchtstoffplatte auch im Falle einer horizontalen Orientierung und Beförderung zuverlässig an bzw. auf der Ausrichtkante an zu liegen kommt. Darüber hinaus wird durch die erfindungsgemäße Einstellung des Druckes, mit dem die Transportwalzen auf die Speicherleuchtstoffplatte drücken, ein Schlupf zwischen den rotierenden Transportwalzen und der beförderten Speicherleuchtstoffplatte ermöglicht, wenn diese bei der Beförderung zumindest teilweise an der Ausrichtkante anliegt. Dieser Schlupf hat zur Folge, dass die Umlaufgeschwindigkeit einer oder mehrerer der Transportwalzen höher ist als die Geschwindigkeit, mit welcher die Speicherleuchtstoffplatte in Richtung auf die Ausrichtkante bewegt wird.

Wenn nun die führende Kante der Speicherleuchtstoffplatte nicht parallel zur Ausrichtkante verläuft, d. h. die Speicherleuchtstoffplatte gegenüber ihrer ausgerichteten Orientierung etwas verdreht ist, kommt zunächst nur eine Ecke der führenden Kante der Speicherleuchtstoffschicht mit der Ausrichtkante in Berührung. Der zwischen den rotierenden Transportwalzen und der Speicherleuchtstoffplatte auftretende Schlupf hat dann zur Folge, dass die Speicherleuchtstoffplatte so lange um diesen Kontaktpunkt gedreht wird, bis die führende Kante vollständig an der Ausrichtkante anliegt und die Speicherleuchtstoffplatte an der Ausrichtkante ausgerichtet ist.

Durch die Erfindung wird ein zuverlässiges Ausrichten der Speicherleuchtstoffplatte an der Ausrichtkante, insbesondere auch bei einer horizontalen Orientierung der Speicherleuchtstoffplatte, gewährleistet.

Vorzugsweise ist mindestens ein Transportwalzenpaar vorgesehen, welches zwei rotierende Transportwalzen umfasst, die zu beiden Seiten der Speicherleuchtstoffplatte angeordnet sind und von beiden Seiten auf die Speicherleuchtstoffplatte drücken. Durch die Verwendung von einem oder mehreren rotierenden Transportwalzenpaaren wird ein besonders zuverlässiges Ausrichten der Speicherleuchtstoffplatte an der Ausrichtkante gewährleistet.

Es ist außerdem bevorzugt, dass die Steuereinrichtung mindestens zwei unterschiedliche Abstände zwischen den Transportwalzen und der Speicherleuchtstoffplatte bzw. - im Falle von Transportwalzenpaaren - zwischen den Transportwalzen eines Transportwalzenpaares einstellen kann, wodurch mindestens zwei unterschiedliche Drücke, mit denen die Transportwalzen auf die Speicherleuchtstoffplatte drücken, eingestellt werden können. Hierdurch lässt sich eine exakte Einstellung des Druckes, mit dem die Transportwalzen auf die Speicherleuchtstoffplatte drücken, auf einfache Weise realisieren.

Bei dieser Ausführung ist bevorzugt, dass bei einem ersten Abstand ein erster Druck eingestellt wird, bei welchem zwischen den rotierenden Transportwalzen und der in Transportrichtung beförderten Speicherleuchtstoffplatte ein Schlupf auftreten kann, wenn die Speicherleuchtstoffplatte mit der Ausrichtkante in Berührung kommt. Insbesondere ist hierbei vorgesehen, dass bei einem zweiten Abstand ein zweiter Druck eingestellt wird, wobei der zweite Abstand kleiner ist als der erste Abstand und der zweite Druck größer ist als der erste Druck, so dass zwischen den rotierenden Transportwalzen und der in Transportrichtung beförderten Speicherleuchtstoffplatte kein Schlupf auftreten kann. Bei dieser Ausführung können die Walzen von einem reinen "Transportmodus", bei welchem sie einen zweiten Abstand zur Speicherleuchtstoffplatte bzw. zueinander haben und die Speicherleuchtstoffplatte im Wesentlichen schlupffrei befördern, in einen "Ausrichtmodus" umgeschaltet werden, bei welchem sie einen ersten Abstand zur Speicherleuchtstoffplatte bzw. zueinander haben und dabei die Speicherleuchtstoffplatte sowohl in Richtung auf die Ausrichtkante hin befördern als auch an der Ausrichtkante ausrichten.

In einer bevorzugten Ausgestaltung der Vorrichtung ist vorgesehen, dass die Transportwalzen jeweils einen Mantel aus einem elastischen Material umfassen, welches eine Härte im Bereich zwischen 30° und 60° Shore, insbesondere zwischen 40° und 50° Shore, aufweist. Durch die Wahl eines elastischen Materials in diesem Härtebereich wird eine besonders zuverlässige Einstellung des Druckes auf die Speicherleuchtstoffplatte und damit die Erzeugung des erforderlichen Schlupfes zwischen den Transportwalzen und der Speicherleuchtstoffplatte ermöglicht.

Vorzugsweise umfasst eine Transportwalze eine metallische Welle, welche den Walzenkern bildet. Der um den Walzenkern der Transportwalze angeordnete Mantel besteht bevorzugt aus einem Schaumstoff, insbesondere einem Polyurethanschaum, dessen Härte einerseits und Kompressionseigenschaften andererseits zur Einstellung der erforderlichen Drücke zwischen den Transportwalzen und der Speicherleuchtstoffplatte besonders geeignet ist.

Es ist außerdem bevorzugt, dass der Mantel im Außenbereich, mit welchem dieser mit der Speicherleuchtstoffplatte in Kontakt kommt, eine Schicht aus einem Material aufweist, dessen Härte größer ist als die Härte des elastischen Mantels. Insbesondere wird hierbei ein Material gewählt, welches eine besonders hohe Abriebfestigkeit und stabile Reibungseigenschaften aufweist. Eine Schicht aus Polyurethan ist für diese Zwecke besonders geeignet. Durch die erfindungsgemäße Wahl des Materials der auf dem Mantel befindlichen Schicht wird eine hohe Reproduzierbarkeit des für die Ausrichtung der Speicherleuchtstoffplatte erforderlichen Schlupfes erreicht.

Die Erfindung wird nachfolgend anhand von in Figuren dargestellten Ausführungsbeispielen näher erläutert.

Es zeigen:
- Fig. 1: ein Ausführungsbeispiel der Vorrichtung in einer ersten Phase;
- Fig. 2: die in Fig. 1 gezeigte Vorrichtung in einer zweiten Phase;
- Fig. 3: die in Fig. 1 gezeigte Vorrichtung in einer dritten Phase;
- Fig. 4: die in Fig. 1 gezeigte Vorrichtung in einer vierten Phase;
- Fig. 5: die in Fig. 1 gezeigte Vorrichtung in einer fünften Phase;
- Fig. 6: ein bevorzugtes Ausführungsbeispiel der erfindungsgemäßen Vorrichtung; und
- Fig. 7: eine bevorzugte Ausführung der Transportwalzen.

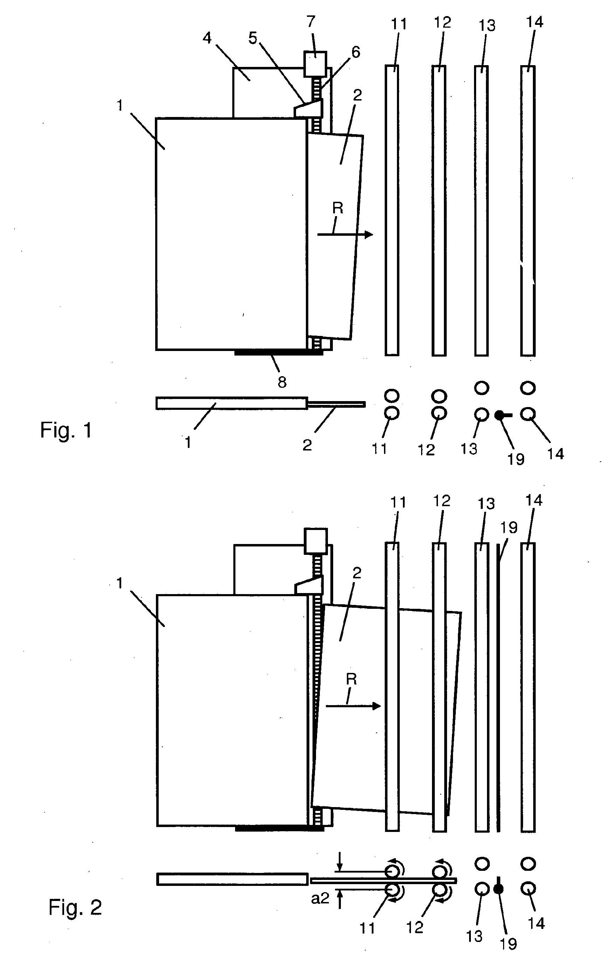

Der obere Bereich von Fig. 1 zeigt eine stark schematisierte Draufsicht auf ein Ausführungsbeispiel der Vorrichtung in einer ersten Phase. Eine Kassette 1, in welcher sich eine Speicherleuchtstoffplatte 2 befindet, wird in einer Eingabeeinrichtung bereitgestellt und dort in einer definierten Position fixiert. Hierzu wird die Kassette auf eine Auflage 4 gelegt, von einem Klemmkeil 5 gegen eine Anschlagskante 8 gedrückt und dabei in dieser Position fixiert. Der Klemmkeil 5 läuft in diesem Beispiel auf einer Gewindestange 6, die von einem Schrittmotor 7 angetrieben wird.

Nach dem Fixieren der Kassette 1 und dem Öffnen einer an der Stirnseite der Kassette 1 schwenkbar angeordneten Verschlussklappe wird die Speicherleuchtstoffplatte 2 mit einem nicht dargestellten Entnahmemechanismus in Richtung R aus der Kassette 1 entnommen zu ersten und zweiten Transportwalzenpaaren 11 und 12 bzw. 13 und 14 befördert.

Die beschriebene Vorrichtung ist im unteren Bereich der Fig. 1 im Querschnitt dargestellt. Zwischen den zweiten Transportwalzenpaaren 13 und 14 ist eine Ausrichtkante 19 angeordnet, welche im Wesentlichen parallel zu den zweiten Transportwalzenpaaren 13 und 14 verläuft und in den zwischen den beiden unteren Transportwalzen der zweiten Transportwalzenpaare 13 bzw. 14 liegenden Transportweg ein- bzw. aus diesem herausgeschwenkt (wie im Beispiel dargestellt) werden kann.

Fig. 2 zeigt eine zweite Phase des in Fig. 1 dargestellten Ausführungsbeispiels, wobei sich die Speicherleuchtstoffplatte 2 vollständig außerhalb der Kassette 1 befindet und von den angetriebenen und rotierenden ersten Transportwalzenpaaren 11 und 12 weiter in Richtung R zu der nun in den Transportweg eingeklappten Ausrichtkante 19 hin befördert wird. Die jeweiligen Transportwalzen der zweiten Transportwalzenpaare 13 bzw. 14 sind in dieser Phase weiterhin geöffnet, wohingegen die Transportwalzen der ersten Transportwalzenpaare 11 und 12 auf die Speicherleuchtstoffplatte 2 drücken und diese in Richtung R befördern. Die Rotationsachsen der jeweils unteren und oberen Transportwalzen der ersten Transportwalzenpaare 11 und 12 weisen hierbei einen zweiten Abstand a2 auf.

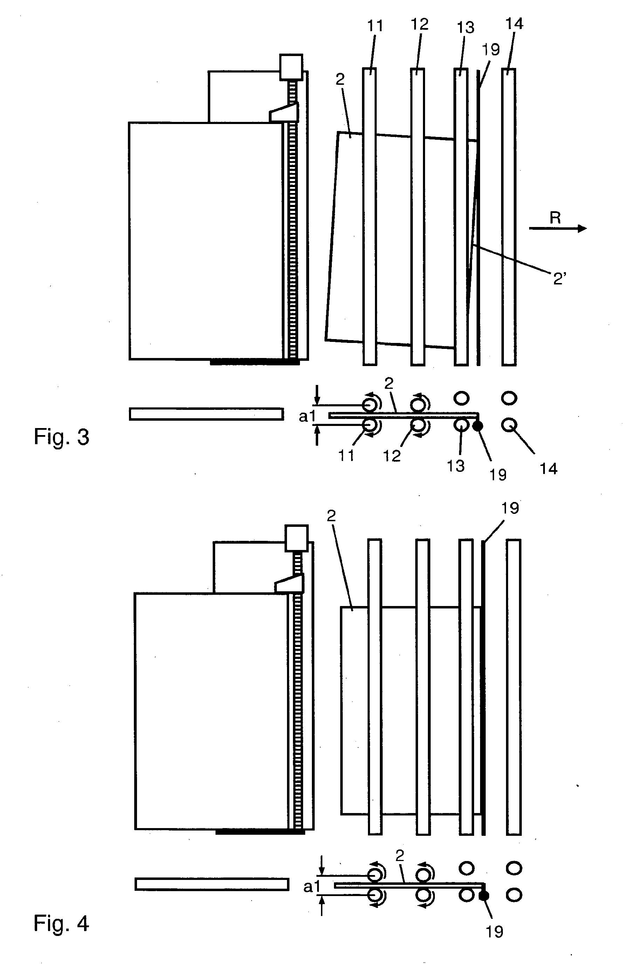

In der in Fig. 3 dargestellten dritten Phase, welcher der zweiten Phase folgt, stößt die führende Kante 2' der Speicherleuchtstoffplatte 2 im Bereich einer ihrer Ecken an die Ausrichtkante 19. Die zweiten Transportwalzenpaare 13 und 14 bleiben in dieser Phase weiterhin geöffnet, und die ersten Transportwalzenpaare 11 und 12 üben einen Druck auf die Speicherleuchtstoffplatte 2 aus, welcher gegenüber dem Druck der in Fig. 2 dargestellten Phase vermindert ist.

Dies wird dadurch erreicht, dass ein erster Abstand a1 zwischen den jeweils unteren und oberen Transportwalzen der ersten Transportwalzenpaare 11 bzw. 12 eingestellt wird, welcher gegenüber dem zweiten Abstand a2 der in Fig. 2 dargestellten Phase vergrößert wird. Der Druck, den die ersten Transportwalzenpaare 11 bzw. 12 auf die Speicherleuchtstoffplatte 2 ausüben, wird auf diese Weise so eingestellt, dass von dem Zeitpunkt an, an dem die Speicherleuchtstoffplatte 2 an die Ausrichtkante 19 stößt, ein Schlupf zwischen den rotierenden ersten Transportwalzenpaaren 11 und 12 einerseits und der Speicherleuchtstoffplatte 2 andererseits entsteht. Dieser Schlupf hat zur Folge, dass die Speicherleuchtstoffplatte 2 um den Berührungspunkt mit der Ausrichtkante 19 herum gedreht wird, wodurch ihre führende Kante 2' entlang der Ausrichtkante 19 ausgerichtet wird. Das Ergebnis dieses Ausrichtvorgangs ist in Fig. 4 dargestellt.

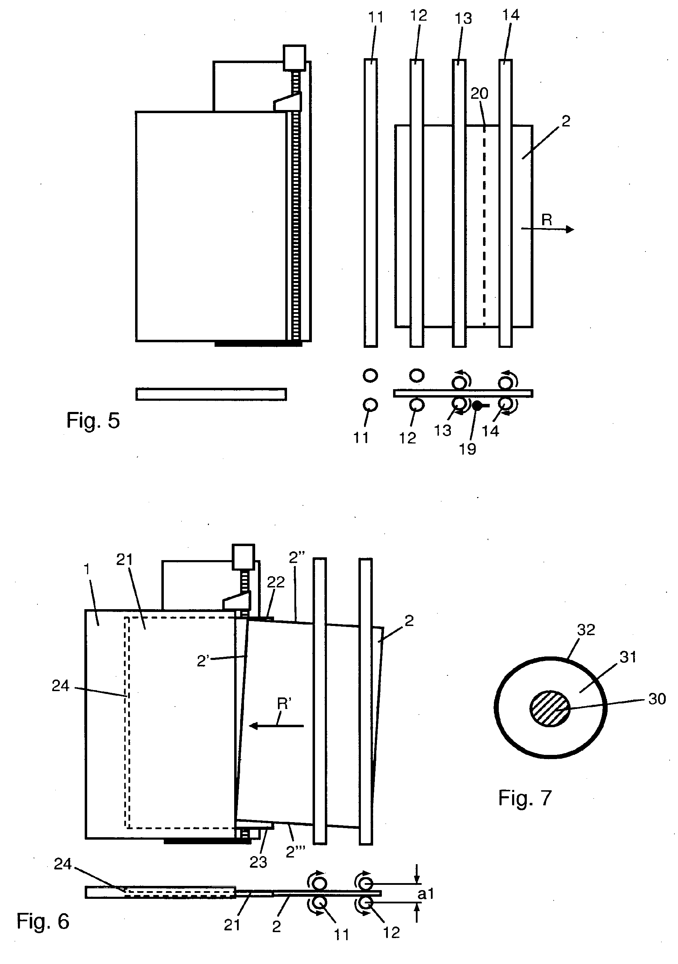

Fig. 5 zeigt eine weitere Phase, in welcher die Ausrichtkante 19 wieder aus der Transportstrecke zwischen den beiden zweiten Transportwalzenpaaren 13 und 14 herausgeschwenkt ist und Letztere die Speicherleuchtstoffplatte 2 weiter in Richtung R befördern. Die Transportwalzen der ersten Transportwalzenpaare 11 und 12 sind in dieser Phase geöffnet.

Bei der hier dargestellten Beförderung der Speicherleuchtstoffplatte 2 in Richtung R wird diese durch eine Ausleseeinheit zum Auslesen von in der Speicherleuchtstoffplatte 2 gespeicherten Röntgeninformationen bewegt. Das Auslesen der Speicherleuchtstoffplatte 2 in der Ausleseeinheit erfolgt hierbei zeilenweise, wobei einzelne Punkte einer Zeile 20 auf der Speicherleuchtstoffplatte jeweils nacheinander - wie bei so genannten Flying Spot-Scannern - oder gleichzeitig - wie bei so genannten Zeilenscannern - mit Stimulationslicht bestrahlt werden und das hierbei angeregte Emissionslicht von einem optischen Detektor erfasst wird. Der Aufbau entsprechender Ausleseeinheiten ist z. B. in EP 1 065 523 A2 und EP 1 034 443 B1 beschrieben.

Das Einstellen der unterschiedlichen Drücke bzw. der Abstände a1 bzw. a2 und das Öffnen der Transportwalzenpaare 11 bzw. 12 kann durch verschiedene Mechanismen realisiert werden, wie z.B. durch Kulissenführungen oder sonstige Führungen, Seilzüge oder Gewindestangen. Diese Mechanismen werden durch einen Motor, wie z.B. einen Schrittmotor, angetrieben, der von einer Steuerungseinrichtung (nicht dargestellt) gesteuert wird.

Fig. 6 zeigt das bevorzugte Ausführungsbeispiel der Erfindung in einer Phase, in welcher die Speicherleuchtstoffplatte 2 nach dem Auslesen in Richtung R' in die Kassette zurück befördert wird. In dem hier gezeigten Beispiel ist in der Kassette 1 eine Auflage 21 vorgesehen, welche in der dargestellten Phase teilweise aus der Kassette 1 ragt und auf welcher die Speicherleuchtstoffplatte 2 abgelegt werden soll. Hierzu wird die Speicherleuchtstoffplatte 2 durch die ersten Transportwalzenpaare 11 und 12 in Richtung R' bewegt.

Im dargestellten Fall ist die Speicherleuchtstoffplatte 2 nicht korrekt in Bezug auf die Auflage 21 ausgerichtet und stößt im Bereich einer Ecke ihrer führenden Kante 2' an einen erhobenen Rand 22 im Seitenbereich der Auflage 21. Es kann auch vorkommen, dass die Speicherleuchtstoffplatte 2 mit einer Seitenkante 2''' einen erhobenen Rand 23 im Seitenbereich der Auflage 21 berührt. Schließlich ist es möglich, dass die Speicherleuchtstoffplatte 2 am Ende des Rücktransports mit der unteren Ecke der führenden Kante 2' an den erhobenen Rand 24 am hinteren Ende der Auflage 21 stößt.

In diesen Fällen wirken die erhobenen Ränder 22, 23 bzw. 24 der Auflage 21 ähnlich wie die bereits oben näher beschriebene Ausrichtkante 19 (siehe Fig. 1 bis 5), d.h. die Speicherleuchtstoffplatte 2 kommt mit dem Rand 22, 23 bzw. 24 der Auflage 21 in Berührung und wird sowohl in Richtung R' befördert als auch am jeweiligen Rand 22, 23 bzw. 24 ausgerichtet.

Der erste Abstand a1 zwischen den jeweiligen Transportwalzen der ersten Transportwalzenpaare 11 und 12 ist hierbei so eingestellt, dass bei der Berührung der Speicherleuchtstoffplatte 2 mit dem erhobenen Rand 22, 23 bzw. 24 ein Schlupf zwischen den ersten Transportwalzenpaaren 11 und 12 einerseits und der Speicherleuchtstoffplatte 2 andererseits auftritt, der zur Folge hat, dass die Speicherleuchtstoffplatte 2 entgegen dem Uhrzeigersinn etwas gedreht wird und mit ihrer Kante 2'', 2''' bzw. 2' an dem erhobenen Rand 22, 23 bzw. 24 der Auflage 21 ausgerichtet wird. Auf diese Weise wird ein zuverlässiges und präzises Ablegen der Speicherleuchtstoffplatte 2 auf der Auflage 21 ermöglicht.

Die Auflage 21 kann dann zusammen mit der darauf befindlichen Speicherleuchtstoffplatte 2 sicher und problemlos in die Kassette 1 eingefahren werden.

Fig. 7 zeigt eine bevorzugte Ausgestaltung der einzelnen Transportwalzen der ersten Transportwalzenpaare 11 und 12. Wie in dem hier dargestellten Querschnitt ersichtlich ist, weisen die Transportwalzen einen Kern 30 auf, welcher vorzugsweise durch eine angetriebene Welle aus Metall gebildet wird. Der Kern 30 ist mit einem Mantel 31 umgeben, welcher aus Schaumstoff, insbesondere aus Polyurethanschaum, besteht und vorzugsweise eine Härte im Bereich zwischen etwa 30° und 60° Shore aufweist. Der Mantel 31 ist mit einer Beschichtung 32 versehen, welche vorzugsweise aus Polyurethan besteht und eine deutlich höhere Härte und Abriebfestigkeit sowie stabilere Reibungseigenschaften aufweist als das Material des Mantels 31. Bei dieser Ausgestaltung lassen sich aufgrund des relativ weichen Schaumstoffmaterials des Mantels 31 die für die Entstehung eines Schlupfes erforderlichen Drücke einfach realisieren, wobei gleichzeitig eine hohe Abriebfestigkeit der Transportwalzen gewährleistet ist.

Für die Erreichung des erfindungsgemäß vorgesehenen Schlupfes ist es bereits ausreichend, wenn zumindest die jeweils obere Transportwalze mindestens eines ersten Transportwalzenpaares 11 bzw. 12 einen Mantel 31 aus dem oben beschriebenen, relativ weichen Schaumstoff aufweist. Der Mantel 31 der jeweils unteren Transportwalze des Transportwalzenpaares 11 bzw. 12 kann in diesem Fall z.B. aus einem relativ harten Gummimaterial bestehen.

Die in den Fig. 1 bis 5 dargestellten zweiten Transportwalzenpaare 13 und 14 weisen vorzugsweise einen Mantel aus einem relativ harten Gummimaterial auf, um eine möglichst schlupffreie und präzise Beförderung der Speicherleuchtstoffplatte 2 durch die Ausleseeinheit zu erreichen.

## Patentansprüche

1. Vorrichtung zum Auslesen von Speicherleuchtstoffplatten (2) zur Speicherung von Röntgeninformation mit
- einer oder mehreren rotierenden Transportwalzen (11 bis 14) zum Befördern der Speicherleuchtstoffplatte (2),
- mindestens einer Ausrichtkante (22-24), an welcher die Speicherleuchtstoffplatte (2) ausgerichtet werden kann, und
- einer Ausleseeinrichtung zum Auslesen der in der Speicherleuchtstoffplatte (2) gespeicherten Röntgeninformation,
**dadurch gekennzeichnet, dass**
- eine Auflage (21) vorgesehen ist, auf welcher die Speicherleuchtstoffplatte (2) abgelegt werden kann und welche zusammen mit der Speicherleuchtstoffplatte (2) in eine Kassette (1) eingefahren werden kann,
- die Ausrichtkante (22-24) durch mindestens einen erhobenen Rand (22, 23 bzw. 24) der Auflage (21) gebildet wird,
- die Speicherleuchtstoffplatte (2) durch die rotierenden Transportwalzen (11, 12) in Richtung (R') auf die Ausrichtkante (22-24) befördert wird und
- eine Steuerungseinrichtung zum Einstellen eines Druckes, mit dem die Transportwalzen (11, 12) auf die Speicherleuchtstoffplatte (2) drücken, vorgesehen ist, wobei der Druck so eingestellt wird, dass zwischen den rotierenden Transportwalzen (11, 12) und der beförderten Speicherleuchtstoffplatte (2) ein Schlupf auftritt, wenn die Speicherleuchtstoffplatte (2) mit der Ausrichtkante (22-24) in Berührung kommt, wodurch die Speicherleuchtstoffplatte (2) ihre Orientierung ändern und dabei an der Ausrichtkante (22-24) ausgerichtet werden kann.

2. Vorrichtung nach Anspruch 1, wobei mindestens ein Transportwalzen-, paar (11, 12) vorgesehen ist, welches zwei rotierende Transportwalzen umfasst, die zu beiden Seiten der Speicherleuchtstoffplatte (2) angeordnet sind und von beiden Seiten auf die Speicherleuchtstoffplatte (2) drücken.

3. Vorrichtung nach Anspruch 1, wobei die Steuerungseinrichtung mindestens zwei unterschiedliche Abstände zwischen den Transportwalzen (11, 12) und der Speicherleuchtstoffplatte (2) einstellen kann, wodurch mindestens zwei unterschiedliche Drücke, mit denen die Transportwalzen (11, 12) auf die Speicherleuchtstoffplatte (2) drücken, eingestellt werden können.

4. Vorrichtung nach Anspruch 2, wobei die Steuerungseinrichtung mindestens zwei unterschiedliche Abstände (a1, a2) zwischen den Transportwalzen eines Transportwalzenpaares (11, 12) einstellen kann, wodurch mindestens zwei unterschiedliche Drücke, mit denen die Transportwalzen auf die Speicherleuchtstoffplatte (2) drücken, eingestellt werden können.

5. Vorrichtung nach Anspruch 3 oder 4, wobei bei einem ersten Abstand (a1) ein erster Druck eingestellt wird, bei welchem zwischen den rotierenden Transportwalzen (11, 12) und der beförderten Speicherleuchtstoffplatte (2) ein Schlupf auftritt, wenn die Speicherleuchtstoffplatte (2) mit der Ausrichtkante (19, 22-24) in Berührung kommt.

6. Vorrichtung nach Anspruch 5, wobei bei einem zweiten Abstand (a2) ein zweiter Druck eingestellt wird und der zweite Abstand (a2) kleiner ist als der erste Abstand (a1) und der zweite Druck größer ist als der erste Druck, so dass zwischen den rotierenden Transportwalzen (11, 12) und der beförderten Speicherleuchtstoffplatte (2) kein Schlupf auftritt.

7. Vorrichtung nach einem der vorausgehenden Ansprüche, wobei die Transportwalzen (11, 12) einen Mantel (31) aus einem elastischen Material umfassen, welches eine Härte im Bereich zwischen 30° und 60° Shore, insbesondere zwischen 40° und 50° Shore, aufweist.

8. Vorrichtung nach Anspruch 7, wobei der Mantel (31) aus einem Schaumstoff, insbesondere einem Polyurethanschaum, besteht.

9. Vorrichtung nach Anspruch 7 oder 8, wobei der Mantel (31) im Außenbereich eine Schicht (32) aus einem Material aufweist, dessen Härte größer ist als die Härte des Mantels (31).

10. Vorrichtung nach Anspruch 9, wobei die Schicht (32) aus Polyurethan besteht.

11. Verfahren zum Auslesen von Speicherleuchtstoffplatten (2) zur Speicherung von Röntgeninformation, bei welchem eine Speicherleuchtstoffplatte (2)
- durch eine oder mehrere rotierende Transportwalzen (11 bis 14) befördert wird,
- an einer Ausrichtkante (22-24) ausgerichtet wird und
- die in der Speicherleuchtstoffplatte (2) gespeicherte Röntgeninformation ausgelesen wird,
**dadurch gekennzeichnet, dass**
- die Speicherleuchtstoffplatte (2) durch die rotierenden Transportwalzen (11, 12) in Richtung (R') auf die Ausrichtkante (19) befördert wird,
- ein Druck, mit dem die Transportwalzen (11, 12) auf die Speicherleuchtstoffplatte (2) drücken, so eingestellt wird, dass zwischen den rotierenden Transportwalzen (11, 12) und der beförderten Speicherleuchtstoffplatte (2) ein Schlupf auftritt, wenn die Speicherleuchtstoffplatte (2) mit der Ausrichtkante (22-24) in Berührung kommt, wodurch die Speicherleuchtstoffplatte (2) ihre Orientierung ändert und dabei an der Ausrichtkante (22-24) ausgerichtet wird, und
- die Ausrichtkante (22-24) durch mindestens einen erhobenen Rand (22, 23 bzw. 24) einer Auflage (21) gebildet wird, auf welcher die Speicherleuchtstoffplatte (2) abgelegt wird und welche zusammen mit der Speicherleuchtstoffplatte (2) in eine Kassette (1) eingefahren wird.

## Claims

1. A device for reading out storage phosphor plates (2) for storing X-ray information, comprising
- one or more rotating transport rollers (11 to 14) for conveying the storage phosphor plate (2),
- at least one aligning edge (22-24) at which the storage phosphor plate (2) can be aligned, and
- a read-out means for reading out the X-ray information stored in the storage phosphor plate (2),
**characterized in that**
- a support (21) is provided on which the storage phosphor plate (2) can be deposited and which, together with the storage phosphor plate (2), can be slid into a cassette (1),
- the aligning edge (22-24) is formed by at least one raised edge (22, 23 resp. 24) of the support (21),
- the storage phosphor plate (2) is conveyed in the direction (R') onto the aligning edge (22-24) by means of the rotating transport rollers (11, 12) and
- a control device is provided for adjusting a pressure with which the transport rollers (11, 12) press on the storage phosphor plate (2), wherein the pressure is adjusted such that a slippage occurs between the rotating transport rollers (11, 12) and the conveyed storage phosphor plate (2) when the storage phosphor plate (2) contacts the aligning edge (22-24), which causes the storage phosphor plate (2) to modify its orientation and to be aligned thereby at the aligning edge (22-24).

2. A device according to claim 1, wherein at least one pair of transport rollers (11, 12) is provided which comprises two rotating transport rollers which are arranged at both sides of the storage phosphor plate (2) and which press on the storage phosphor plate (2) from both sides.

3. A device according to claim 1, wherein the control device can adjust at least two different distances between the transport rollers (11, 12) and the storage phosphor plate (2), thus allowing to adjust at least two different pressures with which the transport rollers (11, 12) press on the storage phosphor plate (2).

4. A device according to claim 2, wherein the control device can adjust at least two different distances (a1, a2) between the transport rollers of a pair of transport rollers (11, 12), thus allowing to adjust at least two different pressures with which the transport rollers press on the storage phosphor plate (2).

5. A device according to claim 3 or 4, wherein at a first distance (a1) a first pressure is adjusted which causes a slippage to occur between the rotating transport rollers (11, 12) and the conveyed storage phosphor plate (2) when the storage phosphor plate (2) contacts the aligning edge (19, 22-24).

6. Device according to claim 5, wherein at a second distance (a2) a second pressure is adjusted and the second distance (a2) is smaller than the first distance (a1) and the second pressure is higher than the first pressure, which prevents slippage from occurring between the rotating transport rollers (11, 12) and the conveyed storage phosphor plate (2).

7. A device according to any of the preceding claims, wherein the transport rollers (11, 12) comprise a jacket (31) made from a resilient material having a Shore hardness between 30° and 60°, in particular between 40° and 50°.

8. A device according to claim 7, wherein the jacket (31) consists of a foam material, in particular a polyurethane foam.

9. A device according to claim 7 or 8, wherein the outer part of the jacket (31) comprises a layer (32) made from a material having a hardness higher than the hardness of the jacket (31).

10. A device according to claim 9, wherein the layer (32) is made from polyurethane.

11. A method for reading out storage phosphor plates (2) for storing X-ray information, in which a storage phosphor plate (2)
- is conveyed by one or more rotating transport rollers (11 to 14),
- is aligned at an aligning edge (22-24) and
- the X-ray information stored in the storage phosphor plate (2) is read out,
**characterized in that**
- the storage phosphor plate (2) is conveyed in the direction (R') onto the aligning edge (19) by means of the rotating transport rollers (11, 12),
- a pressure with which the transport rollers (11, 12) press on the storage phosphor plate (2) is adjusted such that a slippage occurs between the rotating transport rollers (11, 12) and the conveyed storage phosphor plate (2) when the storage phosphor plate (2) contacts the aligning edge (22-24), which causes the storage phosphor plate (2) to modify its orientation and to be aligned thereby at the aligning edge (22-24), and
- the aligning edge (22-24) is formed by at least one raised edge (22, 23 resp. 24) of a support (21) onto which the storage phosphor plate (2) is deposited and which, together with the storage phosphor plate (2), is slid into a cassette (1).

## Revendications

1. Dispositif servant à la lecture de plaques luminescentes à mémoire (2) destinées au stockage d'informations radiographiques, ledit dispositif comprenant
- un ou plusieurs rouleaux de transport rotatifs (11 to 14) servant à acheminer la plaque luminescente à mémoire (2),
- au moins un bord d'alignement (22-24) auquel peut être alignée la plaque luminescente à mémoire (2), et
- un moyen de lecture servant à lire les informations radiographiques stockées dans la plaque luminescente à mémoire (2),
**caractérisé en ce que**
- un support (21) est prévu sur lequel peut être déposée la plaque luminescente à mémoire (2) et qui, avec la plaque luminescente à mémoire (2), peut être introduit dans une cassette (1),
- le bord d'alignement (22-24) est formé par au moins un bord relevé (respectivement 22, 23 et 24) du support (21),
- les rouleaux de transport rotatifs (11, 12) acheminent la plaque luminescente à mémoire (2) dans le sens (R') sur le bord d'alignement (22-24) et
- un dispositif de commande est prévu qui sert à régler la pression avec laquelle les rouleaux de transport (11, 12) sont pressés sur la plaque luminescente à mémoire (2), la pression étant réglée de façon à provoquer un glissement entre les rouleaux de transport rotatifs (11, 12) et la plaque luminescente à mémoire acheminée (2) au moment où la plaque luminescente à mémoire (2) entre en contact avec le bord d'alignement (22-24), ce qui permet à la plaque luminescente à mémoire (2) de modifier son orientation et d'être ainsi alignée au bord d'alignement (22-24).

2. Dispositif selon la revendication 1, **caractérisé en ce qu'**il est prévu au moins une paire de rouleaux de transport (11, 12) comprenant deux rouleaux de transport rotatifs, qui sont disposés des deux côtés de la plaque luminescente à mémoire (2) et qui pressent sur la plaque luminescente à mémoire (2) des deux côtés.

3. Dispositif selon la revendication 1, **caractérisé en ce que** le dispositif de commande peut régler au moins deux distances différentes entre les rouleaux de transport (11, 12) et la plaque luminescente à mémoire (2), permettant ainsi de régler au moins deux pressions différentes avec lesquelles les rouleaux de transport (11, 12) sont pressés sur la plaque luminescente à mémoire (2).

4. Dispositif selon la revendication 2, **caractérisé en ce que** le dispositif de commande peut régler au moins deux distances différentes (a1, a2) entre les rouleaux de transport d'une paire de rouleaux de transport (11, 12), permettant ainsi de régler au moins deux pressions différentes avec lesquelles les rouleaux de transport sont pressés sur la plaque luminescente à mémoire (2).

5. Dispositif selon la revendication 3 ou 4, **caractérisé en ce qu'**à une première distance (a1), une première pression est réglée qui provoque un glissement entre les rouleaux de transport rotatifs (11, 12) et la plaque luminescente à mémoire acheminée (2) lorsque la plaque luminescente à mémoire (2) entre en contact avec le bord d'alignement (19, 22-24).

6. Dispositif selon la revendication 5, **caractérisé en ce qu'**à la deuxième distance (a2), une deuxième pression est réglée, que la deuxième distance (a2) est inférieure à la première distance (a1) et que la deuxième pression est supérieure à la première pression, ce qui évite tout glissement entre les rouleaux de transport rotatifs (11, 12) et la plaque luminescente à mémoire acheminée (2).

7. Dispositif selon l'une quelconque des revendications précédentes, **caractérisé en ce que** les rouleaux de transport (11, 12) comprennent une enveloppe (31) réalisée en un matériau élastique dont la dureté Shore est comprise entre 30° et 60°, en particulier entre 40° et 50°.

8. Dispositif selon la revendication 7, **caractérisé en ce que** l'enveloppe (31) est composée d'une mousse, en particulier d'une mousse de polyuréthane.

9. Dispositif selon la revendication 7 ou 8, **caractérisé en ce que** la partie extérieure de l'enveloppe (31) comprend une couche (32) réalisée à partir d'un matériau dont la dureté est supérieure à celle de l'enveloppe (31).

10. Dispositif selon la revendication 9, **caractérisé en ce que** la couche (32) est réalisée en polyuréthane.

11. Procédé pour la lecture de plaques luminescentes à mémoire (2) servant au stockage d'informations radiographiques, dans lequel une plaque luminescente à mémoire (2)
- est acheminée par un ou plusieurs rouleaux de transport rotatifs (11 à 14),
- est alignée à un bord d'alignement (22-24) et
- dans lequel sont lues les informations radiographiques stockées dans la plaque luminescente à mémoire (2),
**caractérisé en ce que**
- les rouleaux de transport rotatifs (11, 12) acheminent la plaque luminescente à mémoire (2) dans le sens (R') sur le bord d'alignement (19),
- une pression avec laquelle les rouleaux de transport (11, 12) sont pressés sur la plaque luminescente à mémoire (2) est réglée de façon à provoquer un glissement entre les rouleaux de transport rotatifs (11, 12) et la plaque luminescente à mémoire acheminée (2) au moment où la plaque luminescente à mémoire (2) entre en contact avec le bord d'alignement (22-24), ce qui permet à la plaque luminescente à mémoire (2) de modifier son orientation et d'être ainsi alignée au bord d'alignement (22-24), et
- le bord d'alignement (22-24) est formé par au moins un bord relevé (respectivement 22, 23 et 24) d'un support (21) sur lequel est déposée la plaque luminescente à mémoire (2) et qui, avec la plaque luminescente à mémoire (2), est introduit dans une cassette (1).
